(19) Europäisches Patentamt
European Patent Office
Office européen des brevets

(11) Veröffentlichungsnummer: **0 100 008**
**A1**

(12) **EUROPÄISCHE PATENTANMELDUNG**

(21) Anmeldenummer: **83106695.6**

(22) Anmeldetag: **08.07.83**

(51) Int. Cl.[3]: **C 09 B 29/045**
// D06P1/04

(30) Priorität: **17.07.82 DE 3226761**

(43) Veröffentlichungstag der Anmeldung: **08.02.84**
**Patentblatt 84/6**

(84) Benannte Vertragsstaaten: **BE CH DE FR GB IT LI**

(71) Anmelder: **CASSELLA Aktiengesellschaft, Hanauer Landstrasse 526, D-6000 Frankfurt am Main 61 (DE)**

(72) Erfinder: **Bühler, Ulrich, Dr., Kastanienweg 8, D-8755 Alzenau (DE)**
Erfinder: **Ribka, Joachim, Dr., Rügener Strasse 4, D-6050 Offenbach am Main (DE)**
Erfinder: **Bode, Albert, Finkenweg 1, D-6231 Schwalbach (DE)**
Erfinder: **Hähnke, Manfred, Dr., Behringstrasse 13, D-6233 Kelkheim (DE)**
Erfinder: **Roth, Kurt, Breckenheimer Strasse 35, D-6238 Hofheim (DE)**

(74) Vertreter: **Urbach, Hans-Georg, Dr. et al, Hanauer Landstrasse 526, D-6000 Frankfurt am Main 61 (DE)**

(54) **Neue Azofarbstoffe, ihre Herstellung und Verwendung.**

(57) Von wasserlöslichmachenden Gruppen freie Azofarbstoffe der allgemeinen Formel I

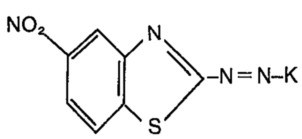

(I),

in der K den Rest einer Kupplungskomponente der Anilin-Reihe mit mindestens 9 C-Atomen, der Phenol-, Naphthalin-, Pyridin-, Benzpyridin-, Diazol-, Thiazol-, Indol-, Carbazol-, Oxazol-, Diazin-Reihe oder aus der Reihe der enolisierbaren 1,3-Dicarbonylverbindungen bedeutet, deren Herstellung und Verwendung.

EP 0 100 008 A1

## Neue Azofarbstoffe, ihre Herstellung und Verwendung

Gegenstand der Erfindung sind neue von wasserlöslichmachenden Gruppen freie Azofarbstoffe der allgemeinen Formel I

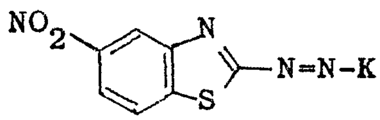

(I) ,

in der K den Rest einer Kupplungskomponete der Anilin-Reihe mit mindestens 9 C-Atomen, der Phenol-, Naphthalin-, Pyridin-, Benzpyridin-, Diazol-, Thiazol-, Indol-, Carbazol-, Oxazol-, Diazin-Reihe oder aus der Reihe der enolisierbaren 1,3-Dicarbonylverbindungen bedeutet.

Die Erfindung betrifft ferner die Herstellung der Farbstoffe der allgemeinen Formel I, dadurch gekennzeichnet, daß man 2-Amino-5-nitro-benzthiazol diazotiert und auf eine Kupplungskomponente der allgemeinen Formel II

K-H (II),

wobei K die vorstehend angegebene Bedeutung besitzt , in üblicher Weise kuppelt.

Die erfindungsgemäßen Farbstoffe eignen sich zum Färben und Bedrucken von hydrophoben Fasermaterialien bzw. Mischungen dieser Materialien mit natürlichen Fasermaterialien, ferner zum Färben von organischen Lösungsmitteln, Mineralölprodukten, Wachsen, Kunststoffen und Oberflächenbelägen.

Ein Farbstoff aus diazotiertem 2-Amino-5-nitro-benzthiazol gekuppelt auf N,N-Dimethylanilin wird als Individuum in Revue Roumaine de Chimie, 21, 4, Seite 600, (1976) beschrieben, ohne daß für diesen Farbstoff besondere technische

Eigenschaften hervorgehoben werden.

Es war daher überraschend, daß die erfindungsgemäßen Farbstoffe,und unter ihnen insbesondere diejenigen mit Kupplungskomponenten der Anilinreihe mit mehr als 9 C-Atomen, insbesondere solche, die längerkettige N-Alkylreste und insbesondere substituierte N-Alkylreste tragen, dem bekannten Farbstoff im Hinblick auf die coloristischen Eigenschaften beim Färben und Bedrucken der genannten Substrate deutlich überlegen sind.

Geeignete Kupplungskomponenten der Anilin-Reihe sind solche, die mindestens 9 C-Atome enthalten und der Formel III

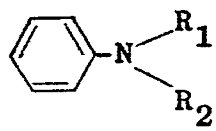

(III)

entsprechen,

worin $R^1$ Wasserstoff, Alkyl, Alkenyl und $R^2$ Alkyl, Alkenyl, Cycloalkyl, Phenyl, Alkylcarbonyl, Benzoyl, Alkylsulfonyl, oder Phenylsulfonyl bedeuten, und deren N-Alkyl-, N-Alkenyl-, N-Cycloalkyl-, N-Phenyl-, N-Acyl-, N-Alkylsulfonyl- und N-Phenylsulfonylrest gegebenenfalls substituiert sein kann und deren Kern gegebenenfalls durch gegebenenfalls substituiertes Alkyl mit 1 bis 4 C-Atomen, gegebenenfalls substituiertes Alkoxy mit 1 bis 4 C-Atomen, Alkenoxy mit 3 oder 4 C-Atomen, gegebenenfalls substituiertes Phenoxy, gegebenenfalls substituiertes Phenyl, Fluor, Chlor, Brom, gegebenenfalls substituiertes Alkylcarbonylamino, gegebenenfalls substituiertes Benzoylamino, Alkenylcarbonylamino, gegebenenfalls substituiertes Alkylsulfonylamino, gegebenenfalls substituiertes Phenylsulfonylamino, gegebenenfalls substituiertes N-Alkyl-N-alkyl-sulfonyl- oder N-Alkyl-N-phenylsulfonylamino, gegebenenfalls substituiertes Alkoxy-, Alkenoxy-, Cycloalkoxy- oder Phenoxycarbonylamino, gegebenenfalls substituiertes

BAD ORIGINAL

Alkyl-, Alkenyl-, Cycloalkyl- oder Phenylaminocarbonylamino oder Hydroxy ein- oder mehrfach substituiert sein kann, bedeuten, wobei die Substituenten so ausgewählt sind, daß die Kupplungskomponenten mindestens 9 C-Atome enthalten.

Als Kupplungskomponenten der Phenol-Reihe kommen insbesondere solche in Frage, deren Kern durch Alkyl mit 1 - 4 C-Atomen und gegebenenfalls substituiertes Alkylcarbonyl- oder Benzoylamino substituiert ist.

Kupplungskomponenten der Naphthalin-Reihe sind 1- oder 2-Naphthylamine der Formel

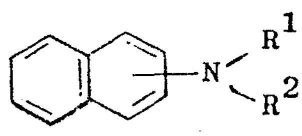

worin $R^1$ Wasserstoff, Alkyl, Alkenyl und $R^2$ Alkyl, Alkenyl, Cycloalkyl, Phenyl, Alkylcarbonyl, Benzoyl, Alkylsulfonyl, oder Phenylsulfonyl bedeutet, wie z.B. N-mono-Alkyl-,N,N-di-Alkyl-, N-mono-Alkenyl-, N,N-di-Alkenyl-, N-Alkyl-N-alkenyl-, N-Cycloalkyl-, N-mono-Phenyl-, N-Phenyl-N-alkyl-, N-Phenyl-N-alkenyl-1- oder -2-Naphthylamine, deren N-Alkyl- oder N-Phenyl-Reste gegebenenfalls substituiert sein können und deren Kern gegebenenfalls substituiert sein kann durch Alkyl mit 1 bis 4 C-Atomen, Alkoxy mit 1 bis 4 C-Atomen, Chlor, Brom, Aminosulfonyl, N-mono- oder N,N-di-alkylsubstituiertes Aminosulfonyl, wobei die Alkylreste ihrerseits unabhängig voneinander gegebenenfalls ein- oder mehrfach substituiert sein können, oder 1- oder 2-Naphthole, deren Kern gegebenenfalls substituiert sein kann, durch Aminocarbonyl, gegebenenfalls unabhängig voneinander substituiertes Mono- oder Dialkyl- oder Phenyl-aminocarbonyl, gegebenenfalls substituiertes Alkoxy-, Alkenoxy-, Cycloalkoxy- oder Phenoxycarbonyl, Amino, gegebenenfalls substituiertes Alkylcarbonylamino, Alkenylcarbonylamino, gegebenenfalls substituiertes Benzoylamino, gegebenenfalls substituiertes Alkylsulfonylamino, gegebenenfalls substituiertes

BAD ORIGINAL

Phenylsulfonylamino, Alkyl mit 1 bis 4 C-Atomen, Alkoxy mit 1 bis 4 C-Atomen, Chlor oder Brom, Aminosulfonyl, Mono- und Di-alkylaminosulfonyl, deren Alkylreste gegebenenfalls unabhängig voneinander substituiert sein können.

Kupplungskomponenten der Pyridin-Reihe sind zum Beispiel die Pyridone der Formel IV

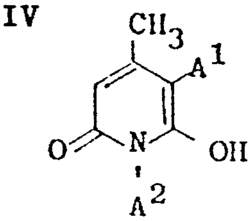

(IV)

in der $A^1$ Cyan, Nitro, gegebenenfalls substituiertes Aminocarbonyl, Wasserstoff und $A^2$ Wasserstoff, gegebenenfalls substituiertes Amino oder gegebenenfalls substituiertes Alkyl mit 1 bis 8 C-Atomen bedeuten, ferner die Pyridine der Formel V

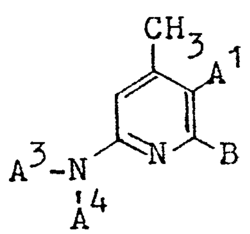

(V)

in der $A^3$ und $A^4$ Wasserstoff oder unabhängig voneinander gegebenenfalls substituiertes Alkyl mit 1 bis 8 C-Atomen, Alkenyl mit 3 bis 5 C-Atomen, Cycloalkyl mit 5 oder 6 C-Atomen und B für $NA^5A^6$ oder für gegebenenfalls substituiertes Alkoxy oder Alkylthio mit 1 bis 8 C-Atomen stehen und $A^5$ und $A^6$ unabhängig voneinander Wasserstoff oder gegebenenfalls substituiertes Alkyl mit 1 bis 8 C-Atomen, Alkenyl mit 3 bis 5 C-Atomen, Cycloalkyl mit 5 oder 6 C-Atomen bedeuten, und $A^1$ die oben genannten Bedeutungen hat, oder die Pyridine der Formel VI

BAD ORIGINAL

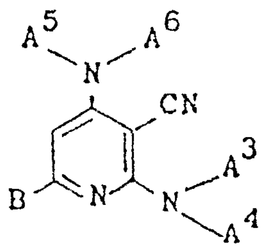

(VI)

in der $A^3$ bis $A^6$ und B die oben genannten Bedeutungen haben. Kupplungskomponenten der Benzpyridin-Reihe sind zum Beispiel: Aminochinoline, N-mono- und N,N-di-Alkyl- oder -Alkenyl-aminochinoline, deren Alkyl- bzw. Alkenylrest gegebenenfalls substituiert sein kann, N-Cycloalkyl- oder N-Phenylaminochinoline, Hydroxychinoline und -isochinoline, N-Alkyl-,-Alkenyl- oder-Phenylchinolone und -isochinolone, deren Alkylrest gegebenenfalls substituiert sein kann. Kupplungskomponenten der Diazol-Reihe sind zum Beispiel: Pyrazolone, Aminopyrazole, N-Alkyl- und N-Phenylpyrazolone bzw. -aminopyrazole, deren Alkyl- bzw. Phenylrest gegebenenfalls substituiert sein kann und deren Kern gegebenenfalls durch gegebenenfalls substituiertes Alkyl oder Phenyl, gegebenenfalls substituiertes Alkoxycarbonyl substituiert sein kann.

Kupplungskomponenten der Thiazol-Reihe sind zum Beispiel: 2-Amino-thiazole, N-mono- und N,N-Di-alkylaminothiazole, deren Alkylreste gegebenenfalls unabhängig voneinander substituiert sind und deren Kern gegebenenfalls durch gegebenenfalls substituiertes Alkyl, Alkenyl, Cycloalkyl, Aralkyl, Aryl, Hetaryl, Hydroxy, Amino, Alkylcarbonylamino, Benzoylamino, Alkylsulfonylamino, Phenylsulfonylamino substituiert sein kann.

Kupplungskomponenten der Indol-Reihe sind zum Beispiel: Indol, N-Alkyl-indol, dessen Alkylrest gegebenenfalls substituiert sein kann und dessen Kern gegebenenfalls durch Alkyl, Alkoxy, Chlor, Brom substituiert sein kann.

Kupplungskomponenten der Carbazol-Reihe sind zum Beispiel: Carbazol, N-Alkylcarbazol, dessen Alkylrest gegebenenfalls

BAD ORIGINAL

substituiert sein kann und dessen Kern gegebenenfalls durch Hydroxy, Alkoxy, Chlor, Brom substituiert sein kann.

Kupplungskomponenten der Oxazol-Reihe sind z.B.: Hydroxyisooxazole, deren Kern gegebenenfalls durch gegebenenfalls substituiertes Alkyl oder Phenyl substituiert sein kann.

Kupplungskomponenten der Diazin-Reihe sind z.B.: N,N-Dialkyl-, N,N-Di-aryl- oder N-Alkyl-N-arylbarbitursäuren.

Bevorzugte Anilin-Kupplungskomponenten mit mindestens 9 C-Atomen, die N-mono-alkyl-, N,N-di-alkyl-, N-mono-alkenyl-, N,N-di-alkenyl-, N-alkyl-N-alkenyl-, N-mono-cycloalkyl-, N-alkyl-N-cycloalkyl-, N-alkenyl-N-cycloalkyl-, N-phenyl-, N-alkyl-N-phenyl-, N-alkenyl-N-phenylsubstituiert sein können, wobei die N-Alkyl-, N-Alkenyl-, N-Cycloalkyl- oder N-Phenylsubstituenten gegebenenfalls substituiert sind, leiten sich zum Beispiel ab von Anilin, 2-Chloranilin, 3-Chloranilin, o- oder m-Toluidin, o-Anisidin, m-Anisidin, 2,5-Dimethoxy- oder 2,5-Diethoxyanilin, 2,5-Dimethyl- oder -Diethylanilin, 2-Methoxy- oder 2-Ethoxy-5-methyl- oder -5-chlor-anilin, 3-(gegebenenfalls substituiertes)Alkyl- oder -Arylcarbonylamino-, 3-(gegebenenfalls substituiertes)-Alkyl- oder -Arylsulfonylamino-, 3-(gegebenenfalls substituiertes)Alkoxy- oder -Phenoxycarbonylamino- oder 3-(gegebenenfalls substituiertes)mono- oder -di-Alkylamino-, 3-Phenylamino- oder 3-N-Alkyl-N-phenylaminocarbonylamino-anilin, 2-Chlor-, 2-Brom-, 2-($C_1$ bis $C_4$)-Alkyl- oder 2-(gegebenenfalls substituiertes)Alkoxy-, -5-(gegebenenfalls substituiertes)alkyl- oder -arylcarbonylamino-, -5-(gegebenenfalls substituiertes)alkyl- oder -arylsulfonylamino-, -5-(gegebenenfalls substituiertes)alkoxy-, -5-alkenoxy-, -5-cycloalkoxy- oder -5-phenoxycarbonylamino-, -5-(gegebenenfalls substituiertes)mono- oder -dialkylamino-, -5-N-alkyl-N-phenylamino- oder -5-phenylaminocarbonylamino-anilin, gegebenenfalls substituiertes Diphenylamin, wobei die Substituenten in allen Fällen so ausgewählt sind, daß die Anilin-Kupplungskomponenten mindestens 9 C-Atome enthalten.

Bevorzugte Phenol-Kupplungskomponenten sind zum Beispiel: o-, m-, p-Kresol, 3-Alkyl- oder -Arylcarbonylaminophenol mit gegebenenfalls substituiertem Alkyl- oder Arylrest. Bevorzugte Naphthylamino-Kupplungskomponenten, die durch Alkyl, Alkenyl, Cycloalkyl oder Phenyl N-mono- oder unabhängig voneinander N.N.-disubstituiert sein können, wobei die N-Alkyl- und N-Phenylsubstituenten gegebenenfalls substituiert sein können, sind zum Beispiel: Naphthylamin-1, 2-, 5- oder 7-Hydroxy- oder 2-Alkoxynaphthylamin-1, Naphthylamin-2, 5-, 6-, 7- oder 8-Hydroxynaphthylamin-2, 5-Aminosulfonyl-, 5-Mono- oder -N.N.-Dialkylaminosulfonyl-naphthylamin-2 mit gegebenenfalls unabhängig voneinander substituiertem Alkylrest.

Bevorzugte Naphthol-Kupplungskomponenten sind zum Beispiel: Naphthol-1, Naphthol-2, 6-Aminosulfonyl-naphthol-2, das durch Alkyl, Alkenyl, Cycloalkyl oder Phenyl unabhängig voneinander N-mono- oder N,N.-disubstituiert sein kann und dessen Alkyl- bzw. Phenylreste gegebenenfalls unabhängig voneinander substituiert sein können, 3-Alkoxy- oder Phenoxycarbonylnaphthol-2, 3-Amino-, N-Mono- oder N,N. Dialkylamino- oder -arylaminocarbonylnaphthol-2 mit gegebenenfalls substituiertem N-Alkyl- oder N-Aryl-Rest.

Bevorzugte Kupplungskomponenten der Pyridin-Reihe sind zum Beispiel: 3-Cyano-4-methyl-6-hydroxypyridon-2, N-Alkyl-, N-Alkenyl-, N-Cycloalkyl- oder N-Aryl-3-cyano-4-methyl-6-hydroxypyridone-2, deren Alkyl- oder Arylreste gegebenenfalls substituiert sind, 2.6-Diamino-3-cyan-4-methyl-pyridine, 2.4.6-Triamino-3-cyanopyridine, 2-Amino-6-alkoxy-3- oder -5-cyan-4-methylpyridine, deren Aminogruppen durch gegebenenfalls unabhängig voneinander substituiertes Alkyl oder durch Alkenyl mono- oder disubstituierte bzw. deren Alkoxygruppen gegebenenfalls substituiert sein können.

Bevorzugte Kupplungskomponenten der Benzpyridin-Reihe sind zum Beispiel: 8-Aminochinolin, dessen Aminogruppe durch gegebenenfalls substituiertes Alkyl, durch Alkenyl oder Cycloalkyl mono- oder durch gegebenenfalls unabhängig voneinander substituiertes Alkyl und/oder Alkenyl disubstituiert sein kann, 4-Hydroxychinolin-2 oder 3-Hydroxy-i-chinolon-1, die gegebenenfalls N-mono-alkyl- oder -alkenylsubstituiert sein können, wobei die Alkylreste gegebenenfalls substituiert sein können.

Bevorzugte Kupplungskomponenten der Diazol-Reihe sind zum Beispiel: N-alkyl-, N-alkenyl-, N-cycloalkyl- oder N-arylsubstituierte Pyrazol-3-one, deren N-Alkyl- oder N-Arylrest gegebenenfalls substituiert sein kann und die in 5-Stellung durch gegebenenfalls substituiertes Alkyl, Aminocarbonyl, das durch gegebenenfalls substituiertes Alkyl oder Alkenyl mono- oder disubstituiert sein kann, oder durch gegebenenfalls substituiertes Alkoxy- oder Alkenoxycarbonyl substituiert sein können, oder 3-Amino-5-alkyl-N-arylpyrazole, deren Aminogruppe durch gegebenenfalls substituiertes Alkyl, durch Alkenyl oder Cycloalkyl mono- oder durch gegebenenfalls unabhängig voneinander substituiertes Alkyl und/oder Alkenyl disubstituiert sein kann.

Bevorzugte Kupplungskomponenten der Thiazol-Reihe sind zum Beispiel: 2-Aminothiazol, dessen Aminogruppe durch gegebenenfalls substituiertes Alkyl, durch Alkenyl oder Cycloalkyl mono- oder durch gegebenenfalls unabhängig voneinander substituiertes Alkyl und/oder Alkenyl disubstituiert sein kann.

BAD ORIGINAL

Bevorzugte Kupplungskomponenten der Carbazol-Reihe sind zum Beispiel: Carbazol, N-Alkylcarbazol, dessen N-Alkylrest gegebenenfalls substituiert sein kann, N-Alkenylcarbazol, 3-Hydroxycarbazol.

Bevorzugte Kupplungskomponenten der Oxazol-Reihe sind zum Beispiel: 5-Hydroxyisooxazole, die in 5-Stellung durch gegebenenfalls substituiertes Alkyl oder Phenyl, gegebenenfalls substituiertes Alkoxy, Chlor oder Brom substituiert sein können.

Bevorzugte enolisierbare 1,3-Dicarbonylverbindungen sind zum Beispiel: Acetessiganilid und seine N-Chlor-, Brom-, Methyl-, Hydroxy- oder Methoxy-phenyl-Homologe.

Gegebenenfalls substituierte Alkyl-Reste der vorstehend genannten Kupplungskomponenten sind vor allem lineare oder verzweigte Alkylreste mit 1 bis 8 C-Atomen wie Methyl, Ethyl, n-Propyl, i-Propyl, n-Butyl, i-Butyl, sek. Butyl, n-Pentyl, i-Pentyl, n-Hexyl, i-Octyl. Alkenylreste der vorstehend genannten Kupplungskomponenten sind vor allem solche mit 3 bis 5 C-Atomen wie zum Beispiel Allyl, Methallyl oder Crotyl. Cycloalkyl- Reste der vorstehend genannten Kupplungskomponenten sind vor allem solche mit 5 oder 6 C-Atomen, also Cyclopentyl oder Cyclohexyl. Gegebenenfalls substituierte Arylreste der vorstehend genannten Kupplungskomponenten sind vor allem Naphthyl-, insbesondere aber Phenylreste.

Die linearen oder verzweigten Alkylreste der Kupplungskomponenten können zum Beispiel folgende Substituenten tragen: Hydroxy, Alkoxy mit 1 bis 4 C-Atomen, Alkenyloxy mit 3 bis 5 C-Atomen, gegebenenfalls substituiertes Phenoxy, Cycloalkoxy mit 5 oder 6 C-Atomen, Hydroxyalkoxy, Alkylcarbonyloxyalkoxy und Phenoxyalkoxy mit 2 bis 4 C-

BAD ORIGINAL

Atomen im Alkoxy- bzw. im Alkylcarbonylrest, Alkoxyalkoxy mit 3 bis 8 C-Atomen, Hydroxy-, Alkylcarbonyloxy- und Phenoxyalkoxyalkoxy mit 4 bis 12 C-Atomen im Alkoxyalkoxyrest und 2 bis 4 C-Atomen im Alkylcarbonylrest; Alkoxyalkoxyalkoxy mit 5 bis 16 C-Atomen; gegebenenfalls durch Hydroxy, Chlor, Brom, Alkoxy mit 1 bis 4 C-Atomen oder Phenoxy substituiertes Alkylcarbonyloxy mit 2 bis 4 C-Atomen; gegebenenfalls substituiertes Benzoyloxy; gegebenfalls durch Hydroxy, Chlor, Brom, Alkoxy mit 1 bis 4 C-Atomen oder Phenoxy substituiertes Alkoxycarbonyloxy mit 1 bis 4 C-Atomen in der Alkoxygruppe; Alkenoxycarbonyloxy mit 3 bis 5 C-Atomen in der Alkenoxygruppe; Cycloalkoxycarbonyloxy mit 5 oder 6 C-Atomen in der Cycloalkoxygruppe; gegebenenfalls substituiertes Phenoxycarbonyloxy; gegebenfalls unabhängig voneinander durch Hydroxy, Chlor, Brom, Alkoxy mit 1 bis 4 C-Atomen oder Phenoxy substituiertes mono-Alkylaminocarbonyloxy mit 1 bis 8 C-Atomen in der Alkylaminogruppe; gegebenenfalls substituiertes Monoarylaminocarbonyloxy; gegebenenfalls substituiertes Phenyl; Chlor; Brom; Cyan; Alkoxycarbonyl mit 1 bis 8 C-Atomen in der gegebenenfalls substituierten Alkoxygruppe; Alkenoxycarbonyl mit 3 bis 5 C-Atomen in der Alkenoxygruppe; Cycloalkoxycarbonyl mit 5 oder 6 C-Atomen in der Cycloalkoxygruppe ; Phenoxycarbonyl mit gegebenenfalls substituiertem Phenoxyrest.

Die Arylreste, insbesondere die Naphthyl- oder Phenylreste, können insbesondere durch Fluor, Chlor, Brom, Trifluormethyl, Alkyl mit 1 bis 4 C-Atomen, Alkoxy mit 1 bis 4 C-Atomen mono- oder disubstituiert sein.

**Bevorzugte Kupplungskomponenten sind ferner solche aus der 6-Hydroxypyridon-2-, Aminopyridin-, Naphthol-2-, Naphthylamin-1-, 2-Aminothiazol-, Indol- oder Carbazol-Reihe.**

BAD ORIGINAL

Besonders bevorzugte Kupplungskomponenten sind solche aus der Anilin-Reihe mit mindestens 9 C-Atomen.

Besonders bevorzugte Kombinationen für Anilin-Kupplungskomponenten sind solche der Formel

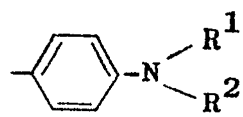

worin $R^1$ substituiertes Alkyl, $R^2$ Alkyl oder gegebenenfalls substituiertes Alkenyl, Cycloalkyl oder Phenyl bedeuten, oder $R^1$ Wasserstoff und $R^2$ substituiertes Alkyl oder gegebenenfalls substituiertes Phenyl bedeuten. Besonders bevorzugt sind solche Kombinationen, in denen $R^1$ und $R^2$ unabhängig voneinander substituiertes Alkyl bedeuten. Unter Alkyl im Sinne vorstehender Substituenten sind insbesondere Alkylgruppen mit 1 - 4 C-Atomen zu verstehen.

Bevorzugt sind weiterhin Anilin-Derivate, deren Kern unsubstituiert oder durch Methyl, Methoxy, Ethoxy, Chlor oder m-ständiges gegebenenfalls substituiertes Alkylcarbonylamino, gegebenenfalls substituiertes Alkylsulfonylamino, gegebenenfalls substituiertes Alkoxycarbonylamino oder gegebenenfalls substituiertes Alkylaminocarbonylamino vorzugsweise einfach, gegebenenfalls aber auch doppelt substituiert ist.

Bevorzugte Farbstoffe der Formel I sind solche mit bevorzugten Kupplungskomponenten und insbesondere diejenigen mit besonders bevorzugten Kupplungskomponenten.

Die Farbstoffe der allgemeinen Formel I werden erhalten, indem man 2-Amino-5-nitro-benzthiazol diazotiert und in üblicher Weise auf eine Kupplungskomponente der allgemeinen Formel II

K-H (II)

kuppelt.

Die Diazotierung des 2-Amino-5-nitrobenzthiazols geschieht in an sich bekannter Weise durch Einwirkung von salpetriger Säure oder salpetrige Säure abspaltender Verbindungen. Beispielsweise können die Amine in Schwefelsäure, Salzsäure, Phosphorsäure oder in niederen aliphatischen Carbonsäuren, wie z.B. Essigsäure oder Propionsäure, gelöst werden und bei 0 bis 60°C durch Zusatz von Nitrosylschwefelsäure bzw. Natriumnitrit diazotiert werden. Die Kupplung auf eine am Kern aminogruppenhaltige Kupplungskomponente wird zum Beispiel im salz- oder schwefelsauren wäßrigen Medium, in einer niederen aliphatischen Carbonsäure, wie z.B. Essigsäure, die gegebenenfalls mit Wasser verdünnt ist, bzw. in einer Mischung aus Wasser und einem in Wasser wenig löslichen Alkohol, wie n- oder i-Butanol, bei Temperaturen von 0 bis 50°C ausgeführt. Bevorzugt wird hierbei der Temperaturbereich von 0 bis 30°C. Zur Vervollständigung der Kupplungsreaktion kann es zweckmäßig sein, den pH-Wert des Kupplungsansatzes am Anfang oder gegen Ende der Reaktion durch Zusatz von Basen, wie z.B. von Natriumacetat, auf einen Wert von 3 bis 6 zu puffern.

Bei der Kupplung auf eine am Kern hydroxygruppenhaltige Kupplungskomponente wird im wäßrigen Medium oder in einer Mischung aus Wasser und einem in Wasser wenig löslichen Alkohol, um die Geschwindigkeit der Reaktion zu erhöhen, diese Kupplungskomponente zusammen mit einer Base wie Natron- oder Kalilauge, Soda, Pottasche oder Natriumhydrogencarbonat vorgelegt und das Reaktionsmedium durch Zugabe von z.B. Natriumacetat gepuffert. Die Isolierung der Farbstoffe erfolgt in der üblichen Art und Weise durch Filtration.

BAD ORIGINAL

Die Farbstoffe der allgemeinen Formel I eignen sich hervorragend zum Färben und Bedrucken von hydrophoben Fasermaterialien wie Polyester, Polyamid, Cellulose2$^{1}$/2acetat, Cellulosetriacetat, Polyacrylnitril bzw. von Mischungen dieser Materialien mit natürlichen Fasermaterialien, so zum Beispiel Cellulosefasern wie Baumwolle oder Eiweißfasern wie Wolle oder Seide. Diese Materialien können in Form von flächen- oder fadenförmigen Gebilden vorliegen und zum Beispiel zu Garnen oder gewebten oder gestrickten Textilstoffen verarbeitet sein. Das Färben des genannten Fasergutes mit den erfindungsgemäßen Farbstoffen erfolgt in an sich bekannter Weise, vorzugsweise aus wäßriger Suspension, gegebenenfalls in Gegenwart von Carriern, zwischen 80 bis 110$^{o}$C nach dem Ausziehverfahren oder dem HT-Verfahren im Färbeautoklav bei 110 bis 140$^{o}$C sowie nach dem sogenannten Thermofixierverfahren, wobei die Ware mit der Färbeflotte geklotzt und anschließend bei etwa 100 bis 230$^{o}$C fixiert wird. Das Bedrucken der genannten Materialien kann so durchgeführt werden, daß die mit erfindungsgemäße Farbstoffe enthaltender Druckpaste bedruckte Ware zur Fixierung des Farbstoffs, gegebenenfalls in Gegenwart eines Carriers, bei Temperaturen zwischen 180 bis 230$^{o}$C mit HT-Dampf, Druckdampf oder Trockenhitze behandelt wird. Man erhält auf diese Weise farbstarke brillante gelbe bis blaue Färbungen und Drucke mit sehr guten Echtheitseigenschaften, insbesondere guter Licht-, Trockenhitzefixier-, Wasser-, Wasch- und Reibechtheit, gutem Aufbau- und Ausziehvermögen, geringer Temperaturempfindlichkeit, guter pH-Beständigkeit und Reduktionsbeständigkeit.

In den bei obigen Applikationen eingesetzten Färbeflotten und Druckpasten liegen die erfindungsgemäßen Farbstoffe, wie bei Dispersionsfarbstoffen üblich, in möglichst feiner Verteilung vor.

BAD ORIGINAL

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 $\mu$ m, vorzugsweise bei etwa 1 $\mu$ m.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden wie z.B. Ethylen- oder Propylenoxid mit alkylierbaren Verbindungen wie z.B. Fettalkoholen, Fettaminen, Fettsäuren, Phenolen, Alkylphenolen und Carbonsäure-amiden. Anionaktive Dispergiermittel sind beispielsweise Ligninsulfonate, Alkyl- oder Alkylarylsulfonate oder Alkyl-aryl-polyglycoläthersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 40 Gewichtsprozent und einen Dispergiermittelgehalt bis zu etwa 25% eingestellt. Aus ökonomischen Gründen werden Farbstoffgehalte von 10 Gewichtsprozent meist nicht unterschritten.

Die Dispersionen können auch noch weitere Hilfsmittel enthalten, z.B. solche, die als Oxydationsmittel wirken, wie z.B. Natrium-m-nitrobenzolsulfonat oder fungicide Mittel wie z.B. Natrium-o-phenyl-phenolat und Natrium-pentachlorphenolat.

BAD ORIGINAL

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.
Für gewisse Anwendungsbereiche werden Pulvereinstellungen bevorzugt. Diese Pulver enthalten den Farbstoff, Dispergiermittel und andere Hilfsmittel wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung durch Trocknung auf Walzentrocknern,vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll der Farbstoff für den Textildruck herangezogen werden, so werden die erforderlichen Mengen der Farbstoffeinstellungen zusammen mit Verdickungsmitteln wie z.B. Alkali-Alginaten oder dergleichen und gegebenenfalls weiteren Zusätzen wie z.B. Fixierbeschleunigern, Netzmitteln und Oxydationsmitteln zu Druckpasten verknetet.

Die Farbstoffe der allgemeinen Formel I eignen sich auch hervorragend zum Färben der vorstehend aufgeführten hydrophoben Materialien aus organischen Lösungsmitteln nach den hierbei bekannten Methoden und zum Färben in der Masse.

BAD ORIGINAL

Die Farbstoffe der Formel I eignen sich auch zum Färben von organischen Lösungsmitteln, Mineralölprodukten, Wachsen, Kunststoffen und Oberflächenbelägen.

In den nachfolgenden Beispielen bedeuten Prozentangaben Gewichtsprozente und Teile Gewichtsteile.

Beispiel 1a:

19,5 g 2-Amino-5-nitro-benzthiazol werden bei 15°C in 200 ml Eisessig durch Zugabe von 34,2 g 40%iger Nitrosylschwefelsäure diazotiert. Zur Vervollständigung der Diazotierung wird der Ansatz 2 Stunden nachgerührt. Die Diazolösung wird anschließend bei 0 - 5°C auf 23,3 g auf N,N-Diacetoxethylanilin, das in 600 ml Wasser und 60 ml konzentrierter Salzsäure gelöst ist, gekuppelt. Während der Zugabe der Diazolösung werden gleichzeitig ca. 1000 g Eis/Wasser zugegeben. Nach beendeter Kupplung wird der entstandene Farbstoff abgesaugt, mit Wasser gewaschen und unter vermindertem Druck getrocknet.
Man erhält so 24 g eines Farbstoffs der Formel

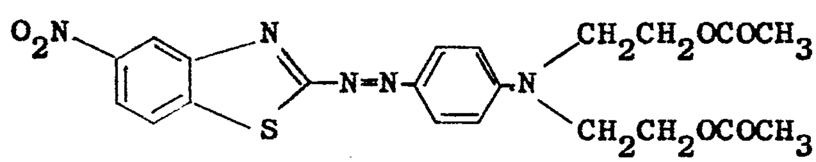

der sich in Essigester in roter Farbe löst.

Beispiel 1b:

1,0 g des so erhaltenen Farbstoffs wird in feindispergierter Form in 2000 g Wasser eingerührt. Die Dispersion wird mit Essigsäure auf einen pH-Wert von 5 - 6 eingestellt und mit 4,0 g Ammoniumsulfat und 2,0 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 1 Stunde bei 130°C. Nach anschließendem Spülen, reduktiver Nachbehandlung mit einer 0,2%igen Natriumdithio-

BAD ORIGINAL

nitlösung während 15 Minuten bei 70 bis 80°C, Spülen und Trocknen erhält man eine farbstarke rote Färbung mit sehr guten coloristischen Eigenschaften.

**Beispiel 2a:**

Die nach Beispiel 1 erhaltene Diazolösung wird auf 31,8 g N-Acetoxethyl-N-cyanethyl-N'-acetylphenylendiamin-1,5, das gelöst in 50 ml Eisessig, 500 ml 1nSalzsäure und 250 g Eiswasser vorgelegt wird, gekuppelt, wobei die Temperatur durch gleichzeitige Zugabe von 500 g Eis und 750 ml Wasser bei 0 bis 5°C gehalten wird. Man erhält nach Aufarbeitung, wie im Beispiel 1a beschrieben, 40 g eines Farbstoffs der Formel

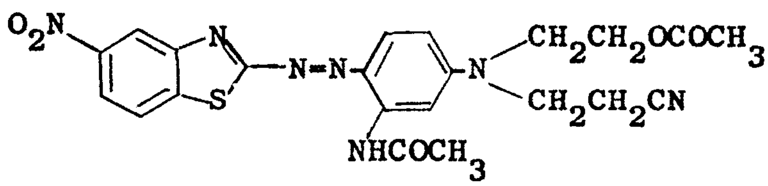

der sich in Chlorbenzol in roter Farbe löst.

**Beispiel 2b:**

20,0 g des so erhaltenen Farbstoffs werden in feiner Verteilung einer Druckpaste, die 45,0 g Johannisbrotkernmehl, 6,0 g 3-nitrobenzolsulfonsaures Natrium und 3,0 g Zitronensäure auf 1000 g enthält, einverleibt. Wird Polyester mit dieser Druckpaste bedruckt, das bedruckte Gewebe nach dem Trocknen 15 Minuten bei einem Dampfüberdruck von 1,5 bar gedämpft, gespült, geseift, erneut gespült und getrocknet, so erhält man einen farbstarken orangefarbenen Druck von sehr guten coloristischen Eigenschaften.

**Tabelle I**

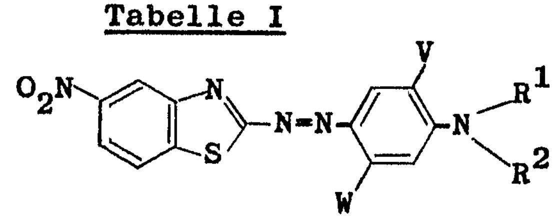

| Beispiel | V | W | $R^1$ | $R^2$ | Nuance auf PES |
|---|---|---|---|---|---|
| 3 | H | H | $(CH_2)_2OCOCH_3$ | $(CH_2)_2CN$ | scharlach |
| 4 | H | H | $(CH_2)_2C_6H_5$ | $(CH_2)_2CN$ | scharlach |
| 5 | H | H | $C_2H_5$ | $(CH_2)_2OH$ | scharlach |
| 6 | H | H | $C_2H_5$ | $(CH_2)_2OCOCH_3$ | scharlach |
| 7 | H | H | $(CH_2)_2OH$ | $(CH_2)_2CN$ | scharlach |
| 8 | H | H | $C-(CH_3)_2COOC_4H_9$ | H | orange |
| 9 | H | H | $CH(C_2H_5)_2$ | H | scharlach |
| 10 | H | H | $(CH_2)_2COOCH_3$ | $CH_2CH=CH_2$ | scharlach |
| 11 | H | H | $(CH_2)_2OCH_3$ | $(CH_2)_2OCH_3$ | scharlach |
| 12 | H | H | $C_2H_5$ | $C_2H_5$ | rot |
| 13 | Cl | H | $(CH_2)_2CN$ | H | orange |
| 14 | Cl | H | $(CH_2)_2O(CH_2)_2OCH_3$ | H | orange |
| 15 | $CH_3$ | H | $CH(CH_3)_2$ | H | scharlach |

Tabelle I

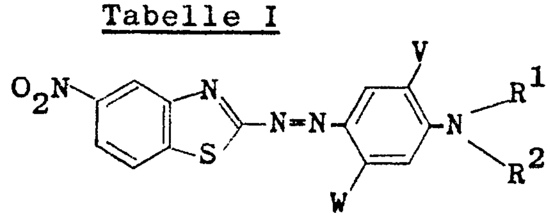

| Beispiel | V | W | $R^1$ | $R^2$ | Nuance auf PES |
|---|---|---|---|---|---|
| 16 | $CH_3$ | H | $(CH_2)_2OC_6H_5$ | H | scharlach |
| 17 | H | $CH_3$ | $(CH_2)_2CN$ | $(CH_2)_2OH$ | rot |
| 18 | H | $CH_3$ | $CH_2CH{=}CH_2$ | $CH_2CH{=}CH_2$ | rot |
| 19 | H | $CH_3$ | $CH_2C_6H_5$ | $(CH_2)_2OH$ | rot |
| 20 | H | $CH_3$ | $n-C_4H_9$ | $(CH_2)_2CN$ | rot |
| 21 | H | $CH_3$ | $COCH_2OCH_3$ | H | orange |
| 22 | H | $CH_3$ | $(CH_2)_2Cl$ | $(CH_2)_2Cl$ | rot |
| 23 | H | $CH_3$ | $(CH_2)_2CN$ | $(CH_2)_2OCOC_2H_5$ | rot |
| 24 | H | $CH_3$ | $(CH_2)_2CN$ | $CH_2CH{=}CH_2$ | rot |
| 25 | H | H | $C_6H_5$ | H | rot |
| 26 | $OCH_3$ | H | $(CH_2)_2OCOC_3H_7$ | $(CH_2)_2OCOC_3H_7$ | scharlach |
| 27 | $OCH_3$ | H | $C-(CH_3)_2COO(CH_2)_2OCH_3$ | H | scharlach |
| 28 | H | $OCH_3$ | $n-C_3H_7$ | $n-C_3H_7$ | rot |

Tabelle I

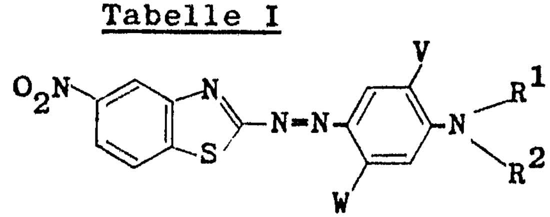

| Beispiel | V | W | $R^1$ | $R^2$ | Nuance auf PES |
|---|---|---|---|---|---|
| 29 | $OCH_3$ | $OCH_3$ | $C_2H_5$ | $C_2H_5$ | rotstichig violett |
| 30 | $CH_3$ | $CH_3$ | $(CH_2)_2COOC_2H_5$ | $(CH_2)_2OH$ | rot |
| 31 | $OCH_3$ | Cl | $(CH_2)_2C_6H_5$ | $(CH_2)_2CN$ | rot |
| 32 | $CH_3$ | $CH_3$ | $(CH_2)_2OH$ | $(CH_2)_2OH$ | rot |
| 33 | $OCH_3$ | $CH_3$ | $CH(CH_3)C_2H_5$ | $(CH_2)_2OH$ | rot |
| 34 | $CH_3$ | Cl | $CH(CH_2OH)C_6H_5$ | H | scharlach |
| 35 | H | $NHCOCH_3$ | $C(CH_3)_2COOC_4H_9$ | H | scharlach |
| 36 | H | $NHCOCH_3$ | $C_2H_5$ | $(CH_2)_2CN$ | rot |
| 37 | H | $NHCOCH_3$ | $(CH_2)_2CN$ | $CH_2CH=CH_2$ | rot |
| 38 | H | $NHCOCH_3$ | $CH_2CH=CH_2$ | $CH_2CH=CH_2$ | rot |
| 39 | H | $NHCOCH_3$ | $(CH_2)_2OCOCH_3$ | $(CH_2)_2OCOCH_3$ | rot |
| 40 | H | $NHOCH_3$ | $(CH_2)_2CN$ | $(CH_2)_2OH$ | rot |
| 41 | H | $NHCOCH_3$ | $CH_2CH(OH)CH_2OC_2H_5$ | H | rot |

Tabelle I

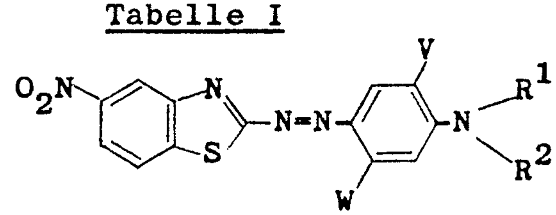

| Beispiel | V | W | $R^1$ | $R^2$ | Nuance auf PES |
|---|---|---|---|---|---|
| 42 | H | $NHCOC_2H_5$ | $C_2H_5$ | $C_2H_5$ | rot |
| 43 | H | $NHCOC_2H_5$ | $(CH_2)_2CN$ | $(CH_2)_2OCOCH_3$ | rot |
| 44 | H | $NHCOC_2H_5$ | $[(CH_2)_2O]_2H$ | $[(CH_2)_2O]_2H$ | rot |
| 45 | $OCH_3$ | $OCH_3$ | $CH_2CH(OH)CH_2OC_6H_5$ | H | rot |
| 46 | $OCH_3$ | $CH_3$ | $n-C_4H_9$ | $n-C_4H_9$ | rot |
| 47 | H | $NHOC_2H_5$ | $CH_2CH(OH)CH_2Cl$ | $CH_2CH(OH)CH_2Cl$ | rot |
| 48 | H | $NHCO-C_4H_9(n)$ | $C_2H_5$ | $C_2H_5$ | rot |
| 49 | H | $NHCOC_6H_5$ | $CH_2C_6H_5$ | H | rot |
| 50 | H | $NHSO_2CH_3$ | $(CH_2)_2OH$ | $(CH_2)_2OH$ | rot |
| 51 | Cl | $NHCOCH_3$ | $CH(C_2H_5)_2$ | H | rotstichig violett |
| 52 | Cl | $NHCOCH_3$ | $CH_2CH=CH_2$ | $CH_2CH=CH_2$ | rotstichig violett |
| 53 | $CH_3$ | $NHCOCH_3$ | $(CH_2)_2COO(CH_2)_2OCH_3$ | H | rotstichig violett |
| 54 | $CH_3$ | $NHCOCH_3$ | $(CH_2)_2CN$ | $CH_2CH=CH_2$ | violett |

Tabelle I

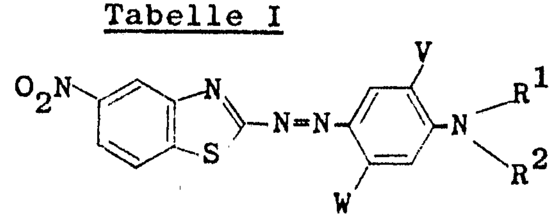

| Beispiel | V | W | $R^1$ | $R^2$ | Nuance auf PES |
|---|---|---|---|---|---|
| 55 | $CH_3$ | $NHCOCH_2OCH_3$ | $C_2H_5$ | $C_2H_5$ | violett |
| 56 | $OCH_3$ | $NHCOCH_3$ | $(CH_2)_2OCOCH_3$ | $(CH_2)_2OCOCH_3$ | violett |
| 57 | $OCH_3$ | $NHCOCH_3$ | $(CH_2)_2CN$ | $CH_2CH=CH_2$ | violett |
| 58 | $OC_2H_5$ | $NHCOCH_3$ | $(CH_2)_2OH$ | $(CH_2)_2OH$ | violett |
| 59 | $O(CH_2)_2OH$ | $NHCOCH_3$ | $CH(CH_3)C_2H_5$ | H | violett |
| 60 | H | H | $CH_2C_6H_5$ | $(CH_2)_2OH$ | scharlach |
| 61 | H | $CH_3$ | $(CH_2)_2CN$ | $n-C_4H_9$ | rot |
| 62 | H | $CH_3$ | $(CH_2)_2OCOCH_3$ | $(CH_2)_2OCOCH_3$ | rot |
| 63 | H | $NHCOC_4H_9$ | $C_2H_5$ | $C_2H_5$ | rot |
| 64 | H | $NHCOCH_3$ | $(CH_2)_2CN$ | $(CH_2)_2OH$ | rot |
| 65 | H | $CH_3$ | $(CH_2)_2OCOCH_3$ | $(CH_2)_2OH$ | rot |
| 66 | H | $CH_3$ | $(CH_2)_2OC_2H_5$ | $(CH_2)_2OC_2H_5$ | rot |
| 67 | H | $NHCOC_2H_5$ | $(CH_2)_2CN$ | $CH_2CH=CH_2$ | rot |

Tabelle I

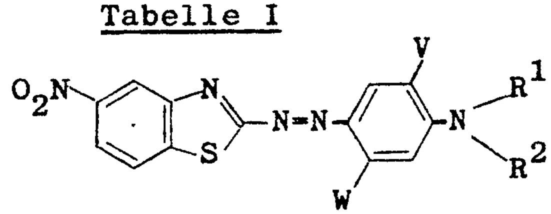

| Bei-spiel | V | W | $R^1$ | $R^2$ | Nuance auf PES |
|---|---|---|---|---|---|
| 68 | H | $NHCOC_2H_5$ | $(CH_2)_2OCOCH_3$ | $(CH_2)_2OCOCH_3$ | rot |
| 69 | H | $NHCOC_3H_7$ | $C_2H_5$ | $C_2H_5$ | rot |
| 70 | H | $OCH_3$ | $(CH_2)_2OCOCH_3$ | $(CH_2)_2OCOCH_3$ | rot |
| 71 | H | $NHCOC_2H_5$ | $(CH_2)_2CN$ | $(CH_2)_2OH$ | rot |
| 72 | $CH_3$ | $NHCOCH_3$ | $CH(CH_3)-C_2H_5$ | H | rot |
| 73 | $OC_2H_5$ | $NHCOCH_3$ | $(CH_2)_2OCOCH_3$ | $(CH_2)_2OCOCH_3$ | violett |
| 74 | $O(CH_2)_2OCH_3$ | $NHCOC_2H_5$ | $C_2H_5$ | H | violett |
| 75 | H | $CH_3$ | $C_2H_5$ | $C_2H_5$ | rot |
| 76 | H | $CH_3$ | $(CH_2)_2OCOCH_3$ | $(CH_2)_2COOCH_3$ | rot |
| 77 | H | $CH_3$ | $(CH_2)_2CN$ | $n-C_3H_7$ | rot |
| 78 | H | H | $(CH_2)_2CN$ | $C_2H_5$ | rot |
| 79 | H | H | $(CH_2)_2CN$ | $CH_3$ | rot |
| 80 | H | H | $(CH_2)_2CN$ | $(CH_2)_2OCOCH_3$ | rot |
| 81 | H | $CH_3$ | $(CH_2)_2CN$ | $C_2H_5$ | rot |

**Tabelle II**

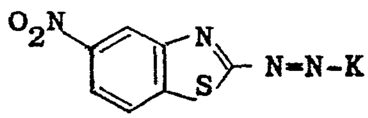

| K | Nuance auf PES |
|---|---|
| 4-Hydroxyphenyl-1 | goldgelb |
| 4-Hydroxy-3-methylphenyl-1 | goldgelb |
| 4-N-Phenylaminonaphthyl-1 | rot |
| 4-N-(2-Hydroxyethylamino)naphthyl-1 | rot |
| 4-N-(2-Methoxycarbonylethylamino)naphthyl-1 | rot |
| 2-Hydroxynaphthyl-1 | rot |
| 2-Hydroxy-6-N(2-hydroxyethyl)-N-methyl-aminosulfonyl-naphthyl-1 | rot |
| 8-N.N-Diethylaminochinolinyl-5 | rot |
| 2.4-Dihydroxychinolinyl-3 | gelb |
| 3-Hydroxy-5-methyl-N-phenyl-pyrazolyl-4 | gelb |
| 3-Amino-5-methyl-N-phenyl-pyrazolyl-4 | orange |
| 2-N-Benzyl-N-(2-hydroxyethyl)amino-thiazolyl-5 | rot |
| 2-N-(2-Cyanethyl)-N-(2-acetoxethyl)amino-thiazolyl-5 | scharlach |
| 2-Methylindolyl-3 | orange |
| Carbazolyl-3 | orange |
| N-Ethylcarbazolyl-3 | orange |
| N-2-Hydroxyethylcarbazolyl-3 | scharlach |
| 5-Hydroxy-5-methyl-isooxazolyl-4 | gelb |

Tabelle III

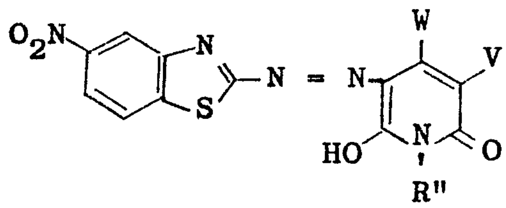

| R" | V | W | Nuance auf PES |
|---|---|---|---|
| H | CN | $CH_3$ | gelb |
| H | CN | $CH_3$ | gelb |
| H | $CONH_2$ | $CH_3$ | gelb |
| H | CN | $C_6H_5$ | gelb |
| $CH_3$ | CN | $CH_3$ | gelb |
| $CH_3$ | CN | $CH_3$ | gelb |
| $C_2H_5$ | CN | $CH_3$ | gelb |
| $(CH_2)_3OCH_3$ | $NO_2$ | $CH_3$ | gelb |
| $n\text{-}C_4H_9$ | CN | $CH_3$ | gelb |
| $n\text{-}C_8H_{17}$ | CN | $CH_3$ | gelb |

Tabelle IV

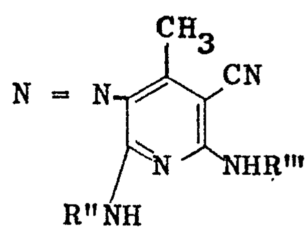

| R" | R''' | Nuance auf PES |
|---|---|---|
| $CH_3O(CH_2)_3$ | $CH_3O(CH_2)_3$ | rot |
| H | $(CH_2)_3O(CH_2)_2OC_6H_5$ | scharlach |
| H | $(CH_2)_3O(CH_2)_4OH$ | scharlach |
| H | $(CH_2)_3O(CH_2)_4OH$ | rot |
| H | $(CH_2)_3O(CH_2)_4OH$ | violett |
| $CH_3O(CH_2)_3$ | $CH_3O(CH_2)_3$ | scharlach |

## Patentansprüche

1. Von wasserlöslichmachenden Gruppen freie Azofarbstoffe der allgemeinen Formel I,

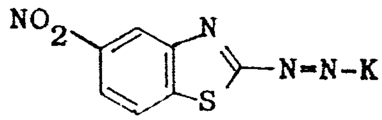

(I) ,

in der K den Rest einer Kupplungskomponete der Anilin-Reihe mit mindestens 9 C-Atomen, der Phenol-, Naphthalin-, Pyridin-, Benzpyridin-, Diazol-, Thiazol-, Indol-, Carbazol-, Oxazol-, Diazin-Reihe oder aus der Reihe der enolisierbaren 1,3-Dicarbonylverbindungen bedeutet.

2. Von wasserlöslichmachenden Gruppen freie Azofarbstoffe gemäß Anspruch 1, dadurch gekennzeichnet, daß sie als Rest der Kupplungskomponente einen solchen der Anilin-Reihe der allgemeinen Formel III

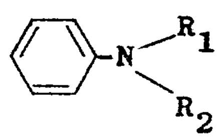

(III)

enthalten,

worin $R^1$ Wasserstoff, Alkyl, Alkenyl und $R^2$ Alkyl, Alkenyl, Cycloalkyl, Phenyl, Alkylcarbonyl, Benzoyl, Alkylsulfonyl, oder Phenylsulfonyl bedeuten, und deren N-Alkyl-, N-Alkenyl-, N-Cycloalkyl-, N-Phenyl-, N-Acyl-, N-Alkylsulfonyl- und N-Phenylsulfonylrest gegebenenfalls substituiert sein kann und deren Kern gegebenenfalls durch gegebenenfalls substituiertes Alkyl mit 1 bis 4 C-Atomen, gegebenenfalls substituiertes Alkoxy mit 1 bis 4 C-Atomen, Alkenoxy mit 3 oder 4 C-Atomen, gegebenenfalls substituiertes Phenoxy, gegebenenfalls substituiertes Phenyl, Fluor, Chlor, Brom, gegebenenfalls substituiertes Alkylcarbonylamino, gegebenenfalls substituiertes Benzoylamino, Alkenylcarbonylamino, gegebenenfalls substituiertes Alkylsulfonylamino, gegebenenfalls substituiertes Phenylsulfonylamino,

BAD ORIGINAL

gegebenenfalls substituiertes N-Alkyl-N-alkyl-sulfonyl- oder N-Alkyl-N-phenylsulfonylamino, gegebenenfalls substituiertes Alkoxy-, Alkenoxy-, Cycloalkoxy- oder Phenoxycarbonylamino, gegebenenfalls substituiertes Alkyl-, Alkenyl-, Cycloalkyl- oder Phenylaminocarbonylamino oder Hydroxy ein- oder mehrfach substituiert sein kann, bedeuten, wobei die Substituenten so ausgewählt sind, daß die Anilinreste mindestens 9 C-Atome enthalten.

3. Von wasserlöslichmachenden Gruppen freie Azofarbstoffe gemäß den Ansprüchen 1 und 2, dadurch gekennzeichnet, daß sie als Rest der Kupplungskomponente einen solchen der Anilin-Reihe der allgemeinen Formel III

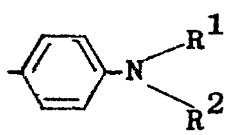

(III)

enthalten, worin $R^1$ substituiertes Alkyl und $R^2$ Alkyl oder gegebenenfalls substituiertes Alkenyl, Cycloalkyl oder Phenyl bedeuten und die Substituenten so ausgewählt sind, daß die Summe der C-Atome in den Anilinresten mindestens 9 C-Atome beträgt, und Alkyl und Alkenyl 1 - 4 C-Atome enthalten.

4. Von wasserlöslichmachenden Gruppen freie Azofarbstoffe gemäß den Ansprüchen 1 und 2, dadurch gekennzeichnet, daß sie als Rest der Kupplungskomponente einen solchen der Anilin-Reihe der allgemeinen Formel III

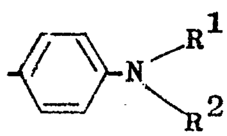

(III)

enthalten, worin $R^1$ Wasserstoff und $R^2$ substituiertes Alkyl oder gegebenenfalls substituiertes Phenyl bedeuten, wobei die Substituenten so ausgewählt sind, daß die Anilinreste mindestens 9 C-Atome enthalten.

5. Von wasserlöslichmachenden Gruppen freie Azofarbstoffe gemäß den Ansprüchen 1 und 2, dadurch gekennzeichnet, daß sie als Rest der Kupplungskomponente einen solchen der Anilin-Reihe der allgemeinen Formel III

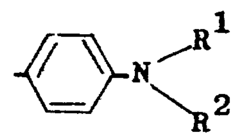

(III)

enthalten, worin $R^1$ und $R^2$ unabhängig voneinander substituiertes Alkyl mit 1 - 4 C-Atomen bedeuten, wobei die Substituenten so ausgewählt sind, daß die Anilinreste mindestens 9 C-Atomen enthalten.

6. Von wasserlöslichmachenden Gruppen freie Azofarbstoffe gemäß den Ansprüchen 1 bis 5, dadurch gekennzeichnet, daß sie sich von Kupplungskomponenten der Anilin-Reihe mit mindestens 9 C-Atomen ableiten, deren Phenylkern des Anilinrestes durch Methyl, Methoxy, Ethoxy, Chlor oder m-ständiges gegebenenfalls substituiertes Alkylcarbonylamino, gegebenenfalls substituiertes Alkylsulfonylamino, gegebenenfalls substituiertes Alkoxycarbonylamino oder gegebenenfalls substituiertes Alkylaminocarbonylamino vorzugsweise einfach, gegebenenfalls aber auch doppelt substituiert ist.

7. Von wasserlöslichmachenden Gruppen freie Azofarbstoffe gemäß Anspruch 1, dadurch gekennzeichnet, daß sie als Rest einer Kupplungskomponente einen solchen eines Pyridons der allgemeinen Formel IV

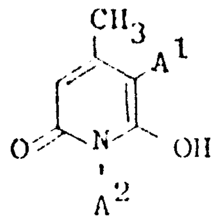

(IV)

in der $A^1$ Cyan, Nitro, gegebenenfalls substituiertes Aminocarbonyl, Wasserstoff und $A^2$ Wasserstoff, gegebenenfalls substituiertes Amino oder gegebenenfalls substituiertes Alkyl mit 1 bis 8 C-Atomen bedeuten, **enthalten.**

8. Verfahren zur Herstellung der von wasserlöslichmachenden Gruppen freien Azofarbstoffe gemäß einem oder mehreren der Ansprüche 1 bis 7, dadurch gekennzeichnet, daß 2-Amino-5-nitro-benzthiazol in an sich bekannter Weise diazotiert und auf eine Kupplungskomponente der allgemeinen Formel II

$$K-H \qquad (II)$$

gekuppelt wird, wobei K die im Anspruch 1 genannte Bedeutung besitzt.

9. Verwendung der Farbstoffe nach einem oder mehreren der Ansprüche 1 bis 7 oder eines nach Anspruch 8 hergestellten Farbstoffs zum Färben und Bedrucken von hydrophoben Fasermaterialien oder Mischungen dieser Materialien mit natürlichen Fasermaterialien und zum Färben von organischen Lösungsmitteln, Mineralölprodukten, Wachsen, Kunststoffen und Oberflächenbelägen.

BAD ORIGINAL

Europäisches Patentamt

# EUROPÄISCHER RECHERCHENBERICHT

0100008

Nummer der Anmeldung

EP 83 10 6695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 434 148 (ICI)<br>* Seite 4, Beispiel 19 * | 1,8,9 | C 09 B 29/045//<br>D 06 P 1/04 |
| X | FR-E- 93 514 (SANDOZ)<br>* Seite 1, Formel I; Seite 2, linke Spalte, Zeile 44; Seite 6, Beispiel 28; Seite 10, Beispiel 133 * | 1-4,8, 9 | |
| X | FR-A-1 574 372 (SANDOZ)<br>* Seite 12, Beispiel 62 * | 1-4,8, 9 | |
| Y | CHEMICAL ABSTRACTS, Band 80, Nr. 24, 17. Juni 1974, Seite 85, Nr. 134888f, Columbus, Ohio, USA<br>K. NISHIDA et al.: "Dyeing properties of monoazo dyes derived from 5-nitro-2-aminobenzothiazole 3-N-oxide on various synthetic polymer fibers" & J. SOC. DYERS COLOUR. 1973, 89(11), 406-8 * Zusammenfassung * | 1,8,9 | RECHERCHIERTE SACHGEBIETE (Int. Cl. 3)<br>C 09 B 29/00 |
| Y | US-A-3 492 078 (STRIGHT)<br>* Spalte 3, Absatz 2, Zeile 59 * | 1,8,9 | |
| E,X | EP-A-0 087 037 (BAYER)<br>* Insgesamt * | 1-9 | |

Der vorliegende Recherchenbericht wurde für alle Patentansprüche erstellt.

| Recherchenort | Abschlußdatum der Recherche | Prüfer |
|---|---|---|
| DEN HAAG | 21-10-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument